# EUROPÄISCHE PATENTSCHRIFT

(11) **EP 2 831 465 B1**
(45) Veröffentlichungstag und Bekanntmachung des Hinweises auf die Patenterteilung: **30.11.2016**
(21) Anmeldenummer: 13711046.6
(22) Anmeldetag: 21.03.2013
(51) Int. Cl.: F16D 66/00, F16D 65/18

(54) **VERFAHREN ZUM BESTIMMEN EINES VORHANDENEN LÜFTSPIELS EINER SCHEIBENBREMSE UND ENTSPRECHENDE SCHEIBENBREMSE**
METHOD FOR DETERMINING THE CLEARANCE PRESENT IN A DISC BRAKE AND CORRESPONDING DISC BRAKE
PROCÉDÉ PERMETTANT DE DÉTERMINER LE JEU DES GARNITURES DANS UN FREIN À DISQUE ET FREIN À DISQUE CORRESPONDANT

(30) Priorität: 26.03.2012 DE 102012102579
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: KLINGNER, Matthias, 82272 Moorenweis (DE); CAMILO-MARTINEZ, Jose, 82008 Unterhaching (DE); STAAHL, Christian, 81929 München (DE); MILLER, Bernhard, 71263 Weil der Stadt (DE); TRIMPE, Robert, 82234 Weißling (DE)
(86) Internationale Anmeldenummer: PCT/EP2013/055889
(87) Internationale Veröffentlichungsnummer: WO 2013/143958

(56) Entgegenhaltungen:
- DE-A1- 19 861 109
- DE-A1-102007 004 604
- US-A1- 2006 090 968
- US-A1- 2008 283 346

## Beschreibung

Die Erfindung betrifft ein Verfahren zum Bestimmen eines vorhandenen Lüftspiels einer Scheibenbremse, insbesondere für ein Kraftfahrzeug, nach dem Oberbegriff des Anspruchs 1. Die Erfindung betrifft auch eine entsprechende Scheibenbremse.

Derartige Scheibenbremsen weisen stets einen definierten Lüftspalt, der auch als Lüftspiel bezeichnet wird, zwischen Bremsbelag und Bremsscheibe auf. Das Lüftspiel hat die Aufgabe, ein Restschleifmoment gering zu halten und einem möglichen "Belagwachsen", z.B. infolge thermischer Belastung genügend Raum zu geben.

Solche Scheibenbremsen, insbesondere für Nutzfahrzeuge, sind üblicherweise druckluftbetätigt und mit automatisch wirkenden, mechanischen Belagverschleißnachstellvorrichtungen ausgestattet. Diese Belagverschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Belagverschleißnachstellvorrichtung z.B. durch eine Verstellbewegung von längenveränderlichen Druckstempeln.

Ein Beispiel einer Nachstellvorrichtung beschreibt das Dokument DE 10 2004 037 771 A1.

Dokument US 2008/0283346 A1 offenbart ein Verfahren zum Bestimmen eines vorhandenen Lüftspiels einer Scheibenbremse nach dem Oberbegriff von Anspruch 1.

Restschleifmomente der Radbremsen, insbesondere von Scheibenbremsen, können zu höheren Kraftstoffverbrauch führen. Darüber hinaus tritt infolge des ständigen Schleifens der Bremsbeläge ein erhöhter Bremsbelagverschleiß ein, wodurch die Wartungskosten des Fahrzeugs erhöht werden.

Ein zu großes Lüftspiel kann dazu führen, dass ein Betätigungshub, z.B. eines Bremsdrehhebels, zur Erzeugung der Zuspannkraft zu groß wird. Damit kann auch ein Luftverbrauch bei einer pneumatischen Scheibenbremse ansteigen, was auch zu einem erhöhten Kraftstoffverbrauch führen kann.

Für eine Einstellung des Lüftspiels, d.h. zur Verringerung des Lüftspiels bei einem zu großen Lüftspiel und zur Vergrößerung des Lüftspiels bei einem zu geringen Lüftspiel, ist es erforderlich, ein tatsächliches, vorhandenes Lüftspiel zu bestimmen.

Die Aufgabe der vorliegenden Erfindung besteht darin, ein Verfahren zum Bestimmen eines Lüftspiels einer Scheibenbremse zu verbessern.

Eine weitere Aufgabe ist es, eine verbesserte Scheibenbremse bereitzustellen.

Die Aufgabe wird durch ein Verfahren mit den Merkmalen des Anspruchs 1, und eine Scheibenbremse mit den Merkmalen des Anspruchs 21 gelöst.

Das erfindungsgemäße Verfahren bestimmt ein vorhandenes Lüftspiel aus gemessenen und angenäherten Werten mit einem definierten maximalen Fehler. Die gemessenen Werte werden erst nach vollendeter Bremsung ausgewertet. D.h., die Auswertung erfolgt nicht in Echtzeit. Die Auswertung erfolgt integral über ein Zeitfenster.

Ein erfindungsgemäßes Verfahren zum Bestimmen eines vorhandenen Lüftspiels einer Scheibenbremse, insbesondere für ein Kraftfahrzeug, umfasst die Verfahrensschritte: (S1) Messen von mindestens zwei Messgrößen der Scheibenbremse während eines Bremsvorgangs, wobei eine Messgröße der mindestens zwei Messgrößen eine Betätigungskraft oder/und ein Betätigungsdruck der Scheibenbremse und eine andere Messgröße der mindestens zwei Messgrößen ein Betätigungshub (s) der Scheibenbremse ist; (S2) Auswerten der erfassten Messwerte der mindestens zwei Messgrößen durch Auswählen von bestimmten Werten und Festlegen eines Startpunkts anhand der ausgewählten Werte; und (S3) Bestimmen des vorhandenen Lüftspiels der Scheibenbremse mittels eines mathematischen Ersatzmodells der Scheibenbremse ausgehend von dem festgelegten Startpunkt.

Durch das Auswählen der bestimmten Werte kann ein Startpunkt so festgelegt werden, dass mit einem mathematischen Ersatzmodell ausgehend von diesem Startpunkt das vorhandene Lüftspiel bestimmt wird. Dabei werden Messwerte der Betätigungskraft, z.B. des Betätigungsdrucks, und des Betätigungshubs, z.B. eines Bremsdrehhebels erfasst und ausgewertet.

Eine erfindungsgemäße Scheibenbremse, insbesondere für ein Kraftfahrzeug, mit einer Zuspannvorrichtung, vorzugsweise mit einem Bremsdrehhebel, einer Belagverschleißnachstellvorrichtung, die vorzugsweise in eine Spindeleinheit der Scheibenbremse einsetzbar und mit der Zuspannvorrichtung, vorzugsweise mit dem Bremsdrehhebel, gekoppelt ist, einem Sensor zur Erfassung eines Betätigungshubs, einem Sensor zur Erfassung einer Betätigungskraft oder eines Betätigungsdrucks und einem Bremssteuergerät ist bereitgestellt. Die Scheibenbremse weist eine Messvorrichtung mit einer Auswerteeinrichtung und mindestens einer Speichereinrichtung zur Bestimmung eines vorhandenen Lüftspiels der Scheibenbremse gemäß dem erfindungsgemäßen Verfahren auf.

Dabei kann der Sensor zur Erfassung einer Betätigungskraft oder eines Betätigungsdrucks auch am Bremssteuergerät angeordnet sein. Darunter ist auch zu verstehen, dass Messwerte einer Betätigungskraft oder eines Betätigungsdrucks vom Bremssteuergerät, z.B. errechnete oder geschätzte Werte, erhalten oder zur Verfügung gestellt werden können.

Mithilfe eines Drucksensors, der oft bei einem Druckregelmodul als Bremssteuergerät vorhanden ist, und eines Betätigungshubsensors können die notwendigen Messgrößen einfach erfasst und gemessen werden. Die Messvorrichtung wertet mit ihrer Auswerteeinrichtung die Messwerte aus und bestimmt anhand eines Ersatzmodells der Bremse das vorhandene Lüftspiel. Die Messvorrichtung kann zum größten Teil auch Bestandteil des Bremssteuergerätes sein.

Die Erfassung des Betätigungshubs kann z.B. an einem Betätigungskolben oder - stößel, an einer Spreizmechanik, Traverse bzw. Brücke oder an den Bremsbelägen erfolgen.

Weitere vorteilhafte Ausgestaltungen sind in den Unteransprüchen angegeben.

Es ist vorgesehen, dass beim Verfahrensschritt (S1) Messen der mindestens zwei Messgrößen der Scheibenbremse das Messen der Betätigungskraft oder/und des Betätigungsdrucks der Scheibenbremse und das Messen des Betätigungshubs der Scheibenbremse gleichzeitig erfolgt und die Messwerte gespeichert werden. Dies ist mit zwei Sensoren möglich. Die gespeicherten Messwerte können somit nach vollendeter Bremsung ausgewertet werden, wozu keine Echtzeitauswertung erforderlich ist. Dies spart Rechenleistung und somit Energie.

Außerdem ist vorgesehen, dass beim Verfahrensschritt (S1) Messen von mindestens zwei Messgrößen der Scheibenbremse Messwerte der gemessenen Messgrößen gefiltert werden. Dadurch wird eine Auswertung schneller und Fehler können verringert werden.

In einer Ausführung werden beim Verfahrensschritt (S2) Auswerten der erfassten Messwerte der mindestens zwei Messgrößen einer oder mehrere charakteristische Kraft- oder/und Druckwerte und einer oder mehrere charakteristische Hubwerte ausgewählt. Die charakteristischen Werte können z.B. Maximalwerte sein.

In einer weiteren Ausführung wird beim Verfahrensschritt (S1) Messen von mindestens zwei Messgrößen der Scheibenbremse ein Festlegen eines ersten Zeitpunkts als Beginn des Bremsvorgangs und eines zweiten Zeitpunkts als Ende des Bremsvorgangs durchgeführt. Dadurch werden mögliche Messwerte in ihrer Anzahl eingeschränkt und auf die wesentlichen Bereiche begrenzt.

Dazu kann ein Festlegen des ersten Zeitpunkts und des zweiten Zeitpunkts durch ein Signal eines Bremssteuergerätes oder/und eine Betätigung eines Bremspedals eines Kraftfahrzeugs, welchem die Scheibenbremse zugeordnet ist, erfolgen. Es ist auch möglich, dass anhand der Messwerte die Zeitpunkte erkannt werden, aber dazu müssten die Sensoren ständig in Bereitschaft eingeschaltet sein und würden Energie verbrauchen. Aufgrund der Signalisierung eines Bremsvorgangs können die Sensoren gezielt aktiviert werden.

In einer alternativen Ausführung kann ein Festlegen des ersten Zeitpunkts und des zweiten Zeitpunkts durch einen Algorithmus erfolgen. Dabei verarbeitet der Algorithmus Messwerte von mindestens einer der mindestens zwei Messgrößen. So können die Messwerte z.B. nur von einem Drucksensor, nur von einem Betätigungshubsensor oder auch von beiden stammen.

In einer weiteren Ausführung bilden der erste Zeitpunkt und der zweite Zeitpunkt ein Zeitfenster. Dieses Zeitfenster beinhaltet den Bremsvorgang mit den Messwerten und schränkt die Zahl der auszuwertenden Messwerte ein.

In einer noch weiteren Ausführung werden beim Verfahrensschritt Auswerten der gemessenen Messwerte der mindestens zwei Messgrößen die innerhalb des Zeitfensters gemessenen Messwerte der mindestens zwei Messgrößen ausgewertet. Das ergibt den Vorteil, dass die Auswertung nach Vollendung eines Bremsvorgangs mit geringerer Rechenleistung als bei Echtzeitauswertung durchgeführt werden kann. Eine solche Auswertung über das Zeitfenster erfolgt integral. Das hat weiterhin den Vorteil, dass Betätigungsdruck und Betätigungshub vom Zeitverlauf einander nicht zugeordnet werden müssen. Der Betätigungsdruck kann somit auch örtlich weiter entfernt von der Scheibenbremse, z.B. am Bremssteuergerät, gemessen werden.

In einer anderen Ausführung wird beim Verfahrensschritt (S3) Bestimmen des vorhandenen Lüftspiels anhand einer Näherungskurve ausgehend von dem festgelegten Startpunkt mittels des Ersatzmodells ein Betätigungshub auf einen Ansprechdruck zurückgerechnet, wobei der Wert des mathematischen Ersatzmodells bei dem Ansprechdruck als Lüftspielwert des vorhandenen Lüftspiels der Scheibenbremse bestimmt wird. Durch die ausgewählten Werte kann der Startpunkt einfach bestimmt werden.

In einer weiteren Ausführung kann die Näherungskurve durch das Ersatzmodell bestimmt werden.

Der Ansprechdruck kann als vorher festlegbarer Einzelwert oder/und Kennfeld verwendet werden. Außerdem können die verwendeten vorher festlegbaren Einzelwerte oder/und Kennfelder mithilfe von Messwerten aktualisiert und angepasst werden. Damit werden Fehler verringert.

In einer noch anderen Ausführung ist das mathematische Ersatzmodell als eine lineare Steifigkeit der Scheibenbremse ausgebildet. Andere Ersatzmodelle und/oder Kombinationen verschiedener Ersatzmodelle sind selbstverständlich möglich.

Auch für das mathematische Ersatzmodell könne vorher festlegbare Einzelwerte oder/und Kennfelder verwendet werden, die natürlich auch mithilfe von Messwerten aktualisiert und angepasst werden können. Dabei können die Messwerte zum Aktualisieren und Anpassen Messwerte der erfassten Messwerte der mindestens zwei Messgrößen sein. So können Fehler minimiert werden.

In einer Ausführung der Scheibenbremse ist die Auswerteeinrichtung zur Auswertung der Messwerte der Sensoren und zur Auswahl einer oder mehrerer charakteristische Kraft- oder/und Druckwerte und einer oder mehrere charakteristische Hubwerte davon ausgebildet. Die Auswerteeinrichtung kann z.B. ein Mikrorechner sein. Sie kann außerdem zur Bestimmung des vorhandenen Lüftspiels der Scheibenbremse unter Anwendung eines mathematischen Ersatzmodells der Scheibenbremse ausgebildet sein.

In einer noch weiteren Ausführung ist die Auswerteeinrichtung mit einem Bremspedal oder/und einem Bremssteuergerät der Scheibenbremse gekoppelt. Auf diese Weise können die Signale eines Bremsbeginns und eines Bremsendes als Fahrerwunsch vom Bremssteuergerät oder direkt vom Bremspedal zur Auswertung und Bestimmung des Zeitfensters herangezogen werden.

Die Erfindung wird nun anhand beispielhafter Ausführungen mit Bezug auf die beigefügten Zeichnungen näher erläutert. Hierbei zeigen:
- Fig. 1: eine schematische Blockdarstellung eines Ausführungsbeispiels einer erfindungsgemäßen Scheibenbremse mit einer Messvorrichtung zur Durchführung eines erfindungsgemäßen Verfahrens;
- Fig. 2: eine beispielhafte Messkurve eines Betätigungsdrucks;
- Fig. 3: eine beispielhafte Messkurve eines Betätigungshubs;
- Fig. 4: eine beispielhafte Näherungskurve;
- Fig. 5-6: Flussdiagramme eines Ausführungsbeispiels des erfindungsgemäßen Verfahrens; und
- Fig. 7: eine schematische Perspektivansicht eines weiteren Ausführungsbeispiels der erfindungsgemäßen Scheibenbremse.

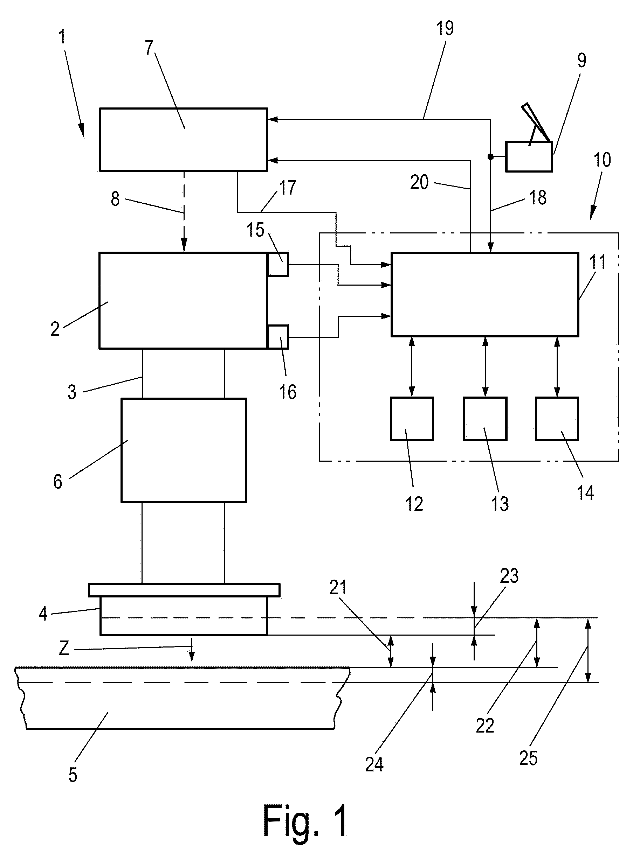

Fig. 1 zeigt eine schematische Blockdarstellung eines Ausführungsbeispiels einer erfindungsgemäßen Scheibenbremse 1 mit einer Messvorrichtung 10 zur Durchführung eines erfindungsgemäßen Verfahrens

In diesem ersten Ausführungsbeispiel ist die Scheibenbremse 1 nur schematisch gezeigt. Sie weist eine Zuspannvorrichtung 2, eine Spindeleinheit 3, einen zuspannseitigen Bremsbelag 4 und einen nicht gezeigten Bremssattel auf, welcher eine Bremsscheibe 5 übergreift. Auf der anderen Seite der Bremsscheibe 5 ist ein anderer Bremsbelag im Bremssattel festgelegt. Der Bremssattel kann hier beispielsweise ein Schiebesattel sein.

Die untenstehenden Beschreibungen hinsichtlich des Bremsbelags 4 gelten somit auch für den nicht gezeigten anderen Bremsbelag der Scheibenbremse 1, was leicht vorstellbar ist.

Die Zuspannvorrichtung 2 kann z.B. ein Druckzylinder mit einem Bremsdrehhebel sein. Der Druckzylinder ist z.B. ein Druckluftzylinder einer pneumatisch betätigten Scheibenbremse 1. Die Zuspannvorrichtung 2 übt bei Betätigung eine Zuspannkraft auf den Bremsbelag 4 in einer Zuspannrichtung Z auf die Bremsscheibe 5 hin aus.

Weiterhin ist der Scheibenbremse 1 ein Bremssteuergerät 7 zugeordnet, welches über eine Verbindung 8 mit der Zuspannvorrichtung 2 verbunden ist. Das Bremssteuergerät 7 kann z.B. ein so genanntes Druckregelmodul sein. In diesem Ausführungsbeispiel ist die Scheibenbremse 1 eine pneumatisch betätigte Scheibenbremse 1, bei welcher ein Druckluftzylinder über ein Steuerventil mit Druckluft bei einem Bremsvorgang zur Betätigung der Zuspannvorrichtung 2 beaufschlagt wird. Dazu symbolisiert die Verbindung 8 z.B. eine Druckluftversorgungsleitung und eine elektrische oder pneumatische Steuerleitung für das Steuerventil. Andere Ausführungen sind selbstverständlich möglich.

Das Bremssteuergerät 7 ist außerdem mit einem Bremspedal 9 über eine Pedalsignalleitung 19 gekoppelt. Die Pedalsignalleitung 19 überträgt einen Fahrerwunsch für eine Bremsung oder ein Lösen der Bremse von dem Bremspedal 9 zu dem Bremssteuergerät 7.

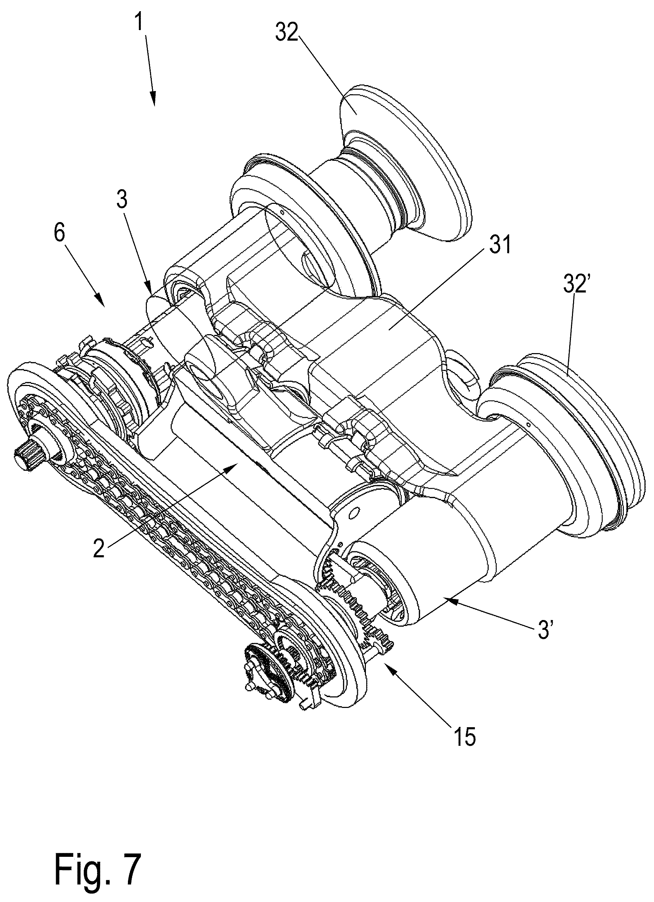

Die Scheibenbremse 1 umfasst in der in Fig. 1 gezeigten Ausführung außerdem eine Belagverschleißnachstellvorrichtung 6, welcher zur Nachstellung des Bremsbelags/der Bremsbeläge bei Verschleiß dient, um ein ursprüngliches Lüftspiel (Soll-Lüftspiel 21), wiederherzustellen. Die Belagverschleißnachstellvorrichtung 6 wird hier nicht weiter beschrieben, sie kann z.B. wie in DE 10 2004 037 771 A1 beschrieben ausgestaltet sein. Die Belagverschleißnachstellvorrichtung 6 ist in der Spindeleinheit 3 eingesetzt und mit dieser gekoppelt (siehe auch Fig. 7).

Ein Abstand zwischen dem Bremsbelag 4 und der Bremsscheibe 5 ist ein definierter Lüftspalt und wird im Allgemeinen als Lüftspiel bezeichnet. In Fig. 1 ist dieser Abstand als Soll-Lüftspiel 21 angegeben. Das Soll-Lüftspiel 21 ist bei noch nicht vorhandenem Verschleiß von Bremsbelag 4 und Bremsscheibe 5 vorhanden. Ein Belagverschleiß ist mit dem Bezugszeichen 23 bezeichnet und ein Scheibenverschleiß mit dem Bezugszeichen 24. Ein Lüftspiel mit Verschleiß ist in der Fig. 1 als Ist-Lüftspiel 22 mit vorhandenem Belagverschleiß 23 angegeben, wobei die Bremsscheibe 5 noch keinen (merklichen) Verschleiß aufweist. Bei einem Ist-Lüftspiel 25 sind sowohl Belagverschleiß 23 als auch Scheibenverschleiß 24 vorhanden.

Das Lüftspiel hat die Aufgabe, ein Restschleifmoment gering zu halten. Ein Restschleifmoment kann durch einen an der Bremsscheibe 5 ohne Lüftspiel anliegenden, schleifenden Bremsbelag 4 erzeugt werden. Das Restschleifmoment führt zu einem erhöhten Verschleiß von Bremsbelag 4 und Bremsscheibe 5, kann die Scheibenbremse 1 unnötig erwärmen und einen Kraftstoffverbrauch eines mit der Scheibenbremse 1 ausgerüsteten Kraftfahrzeugs erhöhen.

Zudem kann das Lüftspiel einem möglichen, so genannten "Belagwachsen" des Bremsbelags 4 infolge thermischer Belastung genügend Raum geben. Das Lüftspiel darf aber auch nicht zu groß gewählt sein, da sonst ein Betätigungshub, z.B. ein Hub eines Bremsdrehhebels, zur Erzeugung der Zuspannkraft zu groß wird. Damit verbunden würde auch ein Hub eines mit dem Bremsdrehhebel in Zusammenwirkung stehenden Druckzylinders vergrößert, was bei einem Druckluftzylinder zu erhöhtem Luftverbrauch führt. Außerdem kann sich eine Verzögerung im Ansprechen der Scheibenbremse 1 ergeben.

Bei einem Bremsvorgang wird bei Betätigung der Scheibenbremse 1 zunächst das Lüftspiel überbrückt, indem der Bremsbelag 4 durch die Zuspannvorrichtung 2 gegen die Bremsscheibe 5 in Zuspannrichtung Z verstellt wird. Aufgrund des Verschleißes der Bremsbeläge (Belagverschleiß 23) wird das Lüftspiel 21 auf das Ist-Lüftspiel 22 vergrößert. Der Scheibenverschleiß 24 der Bremsscheibe 5 vergrößert das Lüftspiel 21 bzw. das Ist-Lüftspiel 22 auf das Ist-Lüftspiel 25 mit Scheibenverschleiß 24.

Der Begriff "Reibepunkt" ist der Punkt, in welchem der Bremsbelag 4 an der Bremsscheibe 5 der Scheibenbremse 1 anliegt. Der Reibepunkt wird beim Zuspannen nach Überbrückung des Lüftspiels 21, 22, 25 erreicht. Somit ist beim zugespannten Bremsbelag 4 das Lüftspiel 21, 22, 25 zu Null geworden. Weiteres Zuspannen bewirkt dann durch Anpressen des Bremsbelags 4 an die Bremsscheibe 5 eine Bremsung. Ein Lösen der Zuspannvorrichtung 2 bewirkt eine Umkehrung des oben beschriebenen Vorgangs.

Die Messvorrichtung 10 dient zum Bestimmen des vorhandenen Lüftspiels 21 der Scheibenbremse 1. Je nach Verschleiß kann das vorhandene Lüftspiel 21 einem Soll-Lüftspiel oder einem Ist-Lüftspiel 22, 25 entsprechen. Die Messvorrichtung 10 umfasst eine Auswerteeinrichtung 11, ein Ersatzmodell 12, eine Datenspeichereinrichtung 13 und eine Speichereinrichtung 14. Diese sind mit der Auswerteeinrichtung 11 verbunden.

Eine Voraussetzung zum Bestimmen des vorhandenen Lüftspiels 21, 22, 25 ist eine Erfassung eines Betätigungshubes und einer Betätigungskraft der Zuspannvorrichtung 2. In dem dargestellten Ausführungsbeispiel ist ein Hubsensor 15 zur Erfassung des Betätigungshubs z.B. eines Betätigungskolbens oder -stößels, einer Spreizmechanik (z.B. Bremsdrehhebel in Fig. 7), einer Traverse (Brücke 26 in Fig. 7) oder eines der Bremsbeläge 4 vorgesehen. Ein solcher Hubsensor 15 wird im Zusammenhang mit Fig. 7 noch erläutert.

Die Betätigungskraft der Zuspannvorrichtung 2 wird in diesem Ausführungsbeispiel einer druckluftbetätigten Scheibenbremse 2 mit einem Drucksensor 16 gemessen. Natürlich sind auch andere Kraftaufnehmer, wie z.B. Dehnungsmessstreifen u.dgl., möglich.

Die Auswerteeinrichtung 11 ist mit dem Hubsensor 15 und dem Drucksensor 16 z.B. jeweils über eine elektrische Leitung verbunden. Der Hubsensor 15 überträgt so den von ihm gemessenen Messwert für den Betätigungshub als elektrisches Signal an die Auswerteeinrichtung 11. Der Hubsensor 15 kann auch an einer anderen Stelle, z.B. an der Spindeleinheit 3 oder/und dem Bremsbelag 4 angeordnet sein. Der Drucksensor 16 überträgt ebenfalls ein elektrisches Signal, welches hier dem gemessenen Messwert des Betätigungsdrucks entspricht, an die Auswerteeinrichtung 11.

Außerdem steht die Auswerteeinrichtung 11 über eine Datenleitung 17 mit dem Bremssteuergerät 7 und über eine Pedalsignalleitung 18 mit dem Bremspedal 9 in Verbindung. Über die Datenleitung 17 kann die Auswerteeinrichtung 11 Daten des Bremssteuergerätes 7 abrufen, welche zu einem jeweiligen Bremsvorgang relevant sind. Dies können z.B. Zeitpunkt des Bremsbeginns, des Lösens, eines Bremsdauer, ein Bremsdruck usw. sein. Die Pedalsignalleitung 18 ist mit der Pedalsignalleitung 19 zum Bremssteuergerät 7 verbunden und überträgt ein Signal des Bremspedals 9 direkt an die Auswerteeinrichtung 11. Weiterhin ist in diesem Ausführungsbeispiel eine Ausgangsleitung 20 der Auswerteeinrichtung 11 an das Bremssteuergerät 7 angeschlossen. Ein vorhandenes Lüftspiel wird, wie unten ausführlich beschrieben, von der Auswerteeinrichtung 11 bestimmt und mittels der Ausgangsleitung 20 als elektrisches Signal oder elektrischer Wert an das Bremssteuergerät 7 weitergeleitet.

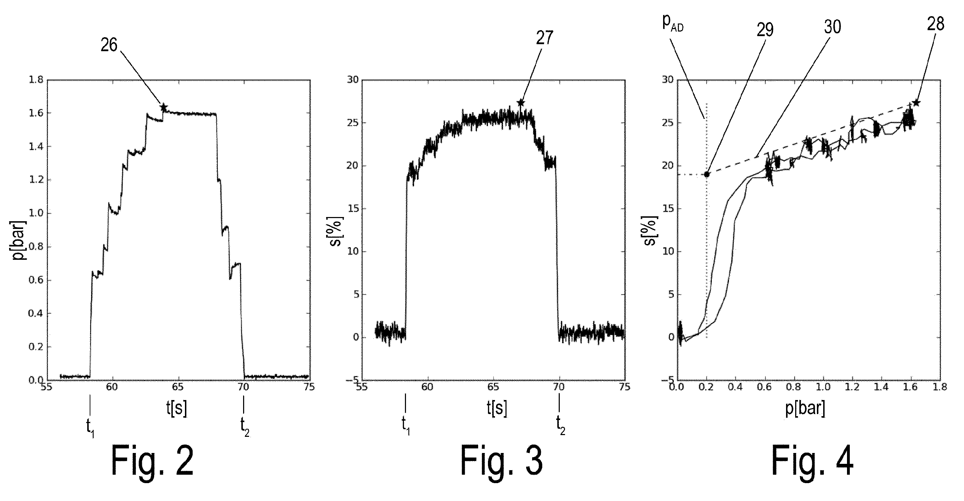

Zum Bestimmen des vorhandenen Lüftspiels erhält die Auswerteeinrichtung 11 in diesem Ausführungsbeispiel Messwerte eines Betätigungsdrucks p und eines Betätigungshubs s. Dazu zeigt Fig. 2 eine beispielhafte Messkurve des Betätigungsdrucks p über der Zeit t. Fig. 3 stellt eine beispielhafte Messkurve des Betätigungshubs s über der Zeit t dar.

In Fig. 2 ist der Betätigungsdruck p bei einem Bremsvorgang aufgetragen. Der Bremsvorgang beginnt in einem Zeitpunkt t₁ und endet in einem Zeitpunkt t₂. Der Zeitabschnitt t₂-t₁ wird hier als ein Zeitfenster t₂-t₁ bezeichnet, das den Bremsvorgang beinhaltet. Der Beginn des Zeitfensters t₂-t₁ im Zeitpunkt t₁ kann durch den Druckanstieg des Betätigungsdrucks p erkannt werden. Weiterhin ist es auch möglich, dass die Auswerteeinrichtung 11 den Beginn des Bremsvorgangs und somit des Zeitfensters t₂-t₁ durch ein Signal des Bremspedals 9 als Fahrerwunsch über die Pedalsignalleitung 18 gemessen. Das Ende des Zeitfensters t₂-t₁ wird dann durch den zu Null werdenden Betätigungsdruck p oder/und durch das Loslassen des Bremspedals 9 erkannt.

Der Betätigungsdruck p (Fig. 2) steigt vom Beginn des Zeitfensters t₂-t₁ bis zu einem Maximalwert an, der während der zugespannten Bremse für eine bestimmte Zeit aufrecht erhalten wird, solange der gewünschte Bremsvorgang andauert, und fällt dann wieder ab. Nach abgeschlossenem Bremsvorgang wird die Messkurve des Betätigungsdrucks p, die innerhalb des Zeitfensters t₂-t₁ liegt, von der Auswerteeinrichtung 11 ausgewertet. Dabei wird ein bestimmter, charakteristischer Wert ausgewählt. In dem gezeigten Beispiel ist dies ein maximaler Druckwert 26, der in der Messkurve in Fig. 2 mit einem Sternchen gekennzeichnet ist.

In ähnlicher Weise wird der zu dem Betätigungsdruck p zugehörige Betätigungshub s der Zuspannvorrichtung 2 gemessen. Die beispielhafte Messkurve zeigt Fig. 3, wobei der Betätigungshub s prozentual angegeben ist. Der Betätigungshub s wird in dem gleichen Zeitfenster t₂-t₁, welches bei der Auswertung des Betätigungsdrucks p zugrunde gelegt ist, ausgewertet. Dabei wird auch ein charakteristischer Wert ausgewählt, z.B. ein maximaler Hubwert 27. Dieser ist in Fig. 3 auch mit einem Sternchen gekennzeichnet.

Die Auswertung beider Messkurven erfolgt nach Vollendung des Bremsvorgangs und muss daher nicht in Echtzeit ausgeführt werden. Die Messwerte können in geeigneter Weise gefiltert werden.

Fig. 4 zeigt eine beispielhafte Näherungskurve 30, wobei der gemessene Betätigungshub s über dem gemessenen Betätigungsdruck p aufgetragen ist. Diese gemessenen Werte ergeben die Kurven mit durchgezogenen Linien. Der Betätigungshub s steigt zunächst leicht und ab einem Ansprechdruck p_{AD} steil an. Der Ansprechdruck p_{AD} ist durch eine gepunktete Linie parallel zur Ordinate verdeutlicht. Der Ansprechdruck p_{AD} tritt nach Überbrückung des Lüftspiels bei Erreichen des Reibepunkts auf. Dabei ist das vorhandene Lüftspiel überwunden. Der steile Anstieg des Betätigungshubs s geht in einen flachen Anstieg mit geringerer Steigung bis zu einem Endwert rechts oben über. Sodann durchläuft der Betätigungshub s beim Lösen der Bremse eine ähnliche Messkurve zurück, bis er den Ausgangswert wieder erreicht.

Die ausgewählten Werte, nämlich Druckwert 26 und Hubwert 27 definieren einen Startpunkt 28 für die Bestimmung des vorhandenen Lüftspiels. Ausgehend von diesem Startpunkt 28 wird mithilfe des Ersatzmodells 12, beispielsweise ein mathematisches Modell in Form eines Algorithmus, der Scheibenbremse 1 der Betätigungshub s auf einen Ansprechdruck p_{AD} zurückgerechnet. Das Ersatzmodell 12 kann z.B. eine lineare Steifigkeit sein. Dieses Zurückrechnen ergibt die Näherungskurve 30, welche in Fig. 4 gestrichelt gezeichnet ist. Rechts oben in Fig. 4 ist der Startpunkt 28, angedeutet durch ein Sternchen.

Die errechnete Näherungskurve 30 schneidet die gepunktete Linie des Ansprechdrucks p_{AD} in einem Punkt, welcher einem vorhandenen Lüftspielwert 29 (mit einem definierten Fehler) entspricht. D.h., der Wert des Ersatzmodells 12 bei Verwendung der ausgewählten Werte (Druckwert 26 und Hubwert 27) der gemessene Werte von Betätigungsdruck p und Betätigungshub s bei dem Ansprechdruck p_{AD} entspricht dem berechneten, vorhandenen Lüftspiel der Scheibenbremse 1.

Für das Ersatzmodell 12 und den Ansprechdruck p_{AD} können z.B. Einzelwerte oder/und Kennfelder hinterlegt sein. Diese hinterlegten Daten sind z.B. in der Datenspeichereinrichtung 13 gespeichert. Diese Einzelwerte und/oder Kennfelder können mithilfe von Messwerten aktualisiert und/oder angepasst werden. Die Speichereinrichtung 14 kann z.B. zum Speichern der aktualisierten und/oder angepassten Werte sowie der berechneten Werte der vorhandenen Lüftspiele dienen.

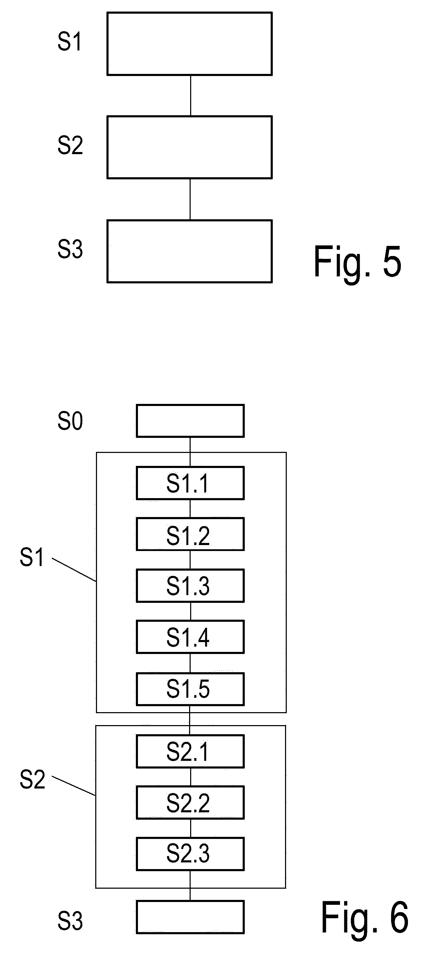

In Fig. 5 ist ein Flussdiagramm eines Ausführungsbeispiels des erfindungsgemäßen Verfahrens zum Bestimmen des vorhandenen Lüftspiels der Scheibenbremse 1 dargestellt. Fig. 6 zeigt das Ausführungsbeispiel nach Fig. 5 mit weiteren Teilschritten.

In einem ersten Verfahrensschritt S1 werden mindestens zwei Messgrößen gemessen. Dies sind die Betätigungskraft bzw. der Betätigungsdruck p und der Betätigungshub s der Scheibenbremse 1. Dann erfolgt ein Auswerten der gemessenen Messwerte der zwei Messgrößen mit der Auswerteeinheit 11 und Auswählen von bestimmten Werten 26, 27 zum Festlegen eines Startpunkts 28 in einem zweiten Verfahrensschritt S2. In einem dritten Verfahrensschritt S3 wird das vorhandene Lüftspiel mittels des Ersatzmodells 12 ausgehend von dem Startpunkt 28 bestimmt.

Vor dem ersten Verfahrensschritt S1 kann in einem vorhergehenden Start-Verfahrensschritt S0 die Messvorrichtung 10 aktiviert werden. Dies kann z.B. dadurch erfolgen, dass aktualisierte Messwerte aus der Datenspeichereinrichtung 13 von der Auswerteeinrichtung 11 geladen werden.

In dem ersten Verfahrensschritt S1 wird in einem ersten Teilschritt S1.1 der Zeitpunkt t₁ durch ein Signal des Bremssteuergerätes 7 oder/und Fahrerwunsch über Bremspedal 9 oder/und den Anstieg des erfassten Betätigungsdrucks oder der Betätigungskraft oder/und den Anstieg des erfassten Betätigungshubes festgelegt. Die Erfassung des Betätigungsdrucks p und die Erfassung des Betätigungshubs s erfolgen in einem Teilschritt S1.2 gleichzeitig. Die Messwerte werden sodann gespeichert, da sie nicht in Echtzeit ausgewertet werden müssen. In einem weiteren Teilschritt S1.3 werden die Messwerte gefiltert. Der Zeitpunkt t₂ wird dann bei Beendigung des Bremsvorgangs durch ein Signal des Bremssteuergerätes 7 oder/und Fahrerwunsch über Bremspedal 9 oder/und den Abfall des erfassten Betätigungsdrucks oder der Betätigungskraft oder/und den Abfall des erfassten Betätigungshubes festgelegt. Das Messen wird in einem weiteren Teilschritt S1.4 eingestellt und das Zeitfenster t₁-t₂ anhand der Zeitpunkte t₁ und t₂ in einem weiteren Teilschritt S1.5 bestimmt. Das Auswerten der gemessenen und gespeicherten Messwerte in Verfahrensschritt S2 erfolgt nach beendetem Bremsvorgang zunächst durch ein Auswählen eines oder mehrerer charakteristischer Druckwerte 26 in einem Teilschritt S2.1, und ein Auswählen eines oder mehrerer charakteristischer Hubwerte 27 wird in einem Teilschritt S2.2 durchgeführt. In einem Teilschritt S2.3 erfolgt dann die Festlegung des Startpunkts 28 anhand der ausgewählten Werte 26 und 27. Dann schließt sich das Bestimmen des vorhandenen Lüftspiels im Verfahrensschritt S3 mittels Berechnen des Lüftspielwerts 29 mit Hilfe des Ersatzmodells 12 an, wobei dazu die Näherungskurve 30 ausgehend von dem Startpunkt 28 mittels des Ersatzmodells 12 berechnet wird. Der Lüftspielwert 29 wird in der Speichereinrichtung 14 gespeichert und gleichzeitig über die Datenleitung 17 an das Bremssteuergerät 7 für weitere Verwendungen übertragen.

Es ist möglich, anhand der gemessenen Messwerte diese mit zuvor abgespeicherten Werten, z.B. Grenzwerten oder Mittelwerten, zu vergleichen und daraus anhand von ebenfalls gespeicherten Tabellen Aussagen über die Funktion und Beschaffenheit der Scheibenbremse 1 in Form von Anzeigen, Meldungen u.dgl. zu machen. Dies kann durch Ablegen solcher Informationen in der Speichereinrichtung zum Abruf durch das Bremssteuergerät 7 oder zum Abruf bei Wartung durch ein entsprechendes Auslesegerät erfolgen.

Schließlich ist in Fig. 7 eine schematische Perspektivansicht eines weiteren Ausführungsbeispiels der erfindungsgemäßen Scheibenbremse 1 mit der Belagverschleißnachstellvorrichtung 6 und einem Ausführungsbeispiel des Hubsensors 15 dargestellt.

In diesem weiteren Ausführungsbeispiel ist die Scheibenbremse 1 als zweistempelige Bremse mit einem nicht gezeigten Bremssattel, welcher die hier nicht gezeigte Bremsscheibe 5 (Fig. 1) übergreift, und einem als Bremsdrehhebel ausgebildete Zuspannvorrichtung 2 zur Zuspannung der Scheibenbremse 1 ausgebildet. Der Bremsdrehhebel wird auch als Spreizmechanik bezeichnet und weist einen Hebelarm auf, welcher z.B. von einem Druckluftbremszylinder betätigbar ist. Der Bremsdrehhebel ist hier über eine Lagerwalze am Bremssattel verschwenkbar gelagert. Der Druckluftbremszylinder ist mit dem nicht gezeigten Drucksensor 14 versehen.

Eine Brücke 31 steht mit dem Bremsdrehhebel in Kontakt und ist von diesem beim Zuspannen und Lösen der Bremse betätigbar. Die Brücke 5 ist an ihren Enden jeweils mit einer Spindeleinheit 3, 3' über jeweils einen Druckstempel gekoppelt. Die in Fig. 7 rechts oben angeordneten Enden der Spindeleinheiten 3, 3' weisen jeweils ein Druckstück 32, 32' auf. Die Druckstücke 32, 32' stehen mit einem nicht gezeigten zuspannseitigen Bremsbelag (z.B. Bremsbelag 4 nach Fig. 1) in Kontakt, welcher auf einer Seite der hier nicht gezeigten Bremsscheibe 5 der Scheiben-bremse 1 angeordnet ist. Auf der anderen Seite der Bremsscheibe 5 ist ein anderer Bremsbelag im Bremssattel festgelegt. Der Bremssattel kann beispielsweise ein Schiebesattel sein.

Der Hubsensor 15 ist hier mit einem Potentiometer ausgebildet, welches über ein Zahnradgetriebe von dem Bremsdrehhebel angetrieben und somit in Abhängigkeit von einem Schwenkwinkel des Bremsdrehhebels seinen elektrischen Widerstand ändert. Dieser elektrische Widerstand ist ein Abbild des Schwenkwinkels des Bremsdrehhebels und somit ein Messwert für den Betätigungshub. Denn der Bremsdrehhebel betätigt beim Verschwenken die Brücke 31 und erzeugt somit einen Verstellhub, welcher abhängig von dem Verschwenkwinkel des Bremsdrehhebels ist. Der Hubsensor 15 ist hier zuspannseitig auf einer der Spindeleinheiten 3, 3' angeordnet.

Die oben beschriebenen Ausführungsbeispiele schränken die Erfindung nicht ein, sondern die Erfindung ist im Rahmen der beigefügten Ansprüche modifizierbar.

So können z.B. bei der Auswertung der Messkurven von Betätigungsdruck p und/oder Betätigungshub s zwei oder mehr charakteristische Werte ausgewählt und anschließend verwendet werden. Bei mehreren charakteristischen Werten können diese durch berechnete und/oder angenäherte gespeicherte Werte zur weiteren Verwendung ersetzt werden.

Der Drucksensor 14 kann auch am Bremssteuergerät 7 angeordnet sein.

Die Messvorrichtung 10 kann vollständig, d.h. ohne Sensoren 15, 16 bzw. ohne Sensor 16, oder auch teilweise Bestandteil des Bremssteuergerätes 7 sein.

### Bezugszeichenliste

- 1: Scheibenbremse
- 2: Zuspannvorrichtung
- 3, 3': Spindeleinheit
- 4: Bremsbelag
- 5: Bremsscheibe
- 6: Belagverschleißnachstellvorrichtung
- 7: Bremssteuergerät
- 8: Verbindung
- 9: Bremspedal
- 10: Messvorrichtung
- 11: Auswerteeinrichtung
- 12: Ersatzmodell
- 13: Datenspeichereinrichtung
- 14: Speichereinrichtung
- 15: Hubsensor
- 16: Drucksensor
- 17: Datenleitung
- 18, 19: Pedalsignalleitung
- 20: Ausgangsleitung
- 21: Lüftspiel
- 22: Ist-Lüftspiel
- 23: Belagverschleiß
- 24: Scheibenverschleiß
- 25: Ist-Lüftspiel (mit Scheibenverschleiß)
- 26: Druckwert
- 27: Hubwert
- 28: Startpunkt
- 29: Lüftspielwert
- 30: Näherungskurve
- 31: Brücke
- 32, 32': Druckstück
- p: Betätigungsdruck
- p_{AD}: Ansprechdruck
- s: Betätigungshub
- S0...3: Verfahrensschritt
- S1.1...1.3; 2.1...2.3: Teilschritt
- t: Zeit
- t1, t2: Zeitpunkt
- Z: Zuspannrichtung

## Patentansprüche

1. Verfahren zum Bestimmen eines vorhandenen Lüftspiels einer Scheibenbremse (1), insbesondere für ein Kraftfahrzeug, mit folgenden Verfahrensschritten:
(S1) Messen von mindestens zwei Messgrößen der Scheibenbremse (1) während eines Bremsvorgangs, wobei eine Messgröße der mindestens zwei Messgrößen eine Betätigungskraft oder/und ein Betätigungsdruck (p) der Scheibenbremse (1) und eine andere Messgröße der mindestens zwei Messgrößen ein Betätigungshub (s) der Scheibenbremse (1) ist;
(S2) Auswerten der erfassten Messwerte der mindestens zwei Messgrößen durch Auswählen von bestimmten Werten (26, 27) und Festlegen eines Startpunkts (28) anhand der ausgewählten Werte (26, 27); **gekennzeichnet durch** das folgende Verfahrensschritt:
(S3) Bestimmen des vorhandenen Lüftspiels der Scheibenbremse (1) mittels eines mathematischen Ersatzmodells (12) der Scheibenbremse (1) ausgehend von dem festgelegten Startpunkt (28).

2. Verfahren nach Anspruch 1, **dadurch gekennzeichnet, dass** beim Verfahrensschritt (S1) Messen der mindestens zwei Messgrößen der Scheibenbremse (1) das Messen der Betätigungskraft oder/und des Betätigungsdrucks (p) der Scheibenbremse (1) und das Messen des Betätigungshubs (s) der Scheibenbremse (1) gleichzeitig erfolgt und die Messwerte gespeichert werden.

3. Verfahren nach Anspruch 1 oder 2, **dadurch gekennzeichnet, dass** beim Verfahrensschritt (S1) Messen von mindestens zwei Messgrößen der Scheibenbremse (1) Messwerte der gemessenen Messgrößen gefiltert werden.

4. Verfahren nach einem der vorhergehenden Ansprüche, **dadurch gekennzeichnet, dass** beim Verfahrensschritt (S2) Auswerten der erfassten Messwerte der mindestens zwei Messgrößen einer oder mehrere charakteristische Kraft- oder/und Druckwerte (26) und einer oder mehrere charakteristische Hubwerte (27) ausgewählt werden.

5. Verfahren nach Anspruch 4, **dadurch gekennzeichnet, dass** der eine/die mehreren charakteristische/n Kraft- oder/und Druckwert/e (26) und Hubwert/e (27) jeweils Maximalwerte sind.

6. Verfahren nach einem der vorhergehenden Ansprüche, **dadurch gekennzeichnet, dass** beim Verfahrensschritt (S1) Messen von mindestens zwei Messgrößen der Scheibenbremse (1) ein Festlegen eines ersten Zeitpunkts (t₁) als Beginn des Bremsvorgangs und eines zweiten Zeitpunkts (t₂) als Ende des Bremsvorgangs durchgeführt wird.

7. Verfahren nach Anspruch 6, **dadurch gekennzeichnet, dass** ein Festlegen des ersten Zeitpunkts (t₁) und des zweiten Zeitpunkts (t₂) durch ein Signal eines Bremssteuergerätes (7) der Scheibenbremse (1) oder/und eine Betätigung eines Bremspedals (9) eines Kraftfahrzeugs, welchem die Scheibenbremse (1) zugeordnet ist, erfolgt.

8. Verfahren nach Anspruch 6, **dadurch gekennzeichnet, dass** ein Festlegen des ersten Zeitpunkts (t₁) und des zweiten Zeitpunkts (t₂) durch einen Algorithmus erfolgt.

9. Verfahren nach Anspruch 8, **dadurch gekennzeichnet, dass** der Algorithmus Messwerte von mindestens einer der mindestens zwei Messgrößen verarbeitet.

10. Verfahren nach einem der Ansprüche 6 bis 9, **dadurch gekennzeichnet, dass** der erste Zeitpunkt (t₁) und der zweite Zeitpunkt (t₂) ein Zeitfenster (t₁-t₂) bilden.

11. Verfahren nach Anspruch 10, **dadurch gekennzeichnet, dass** beim Verfahrensschritt Auswerten der gemessenen Messwerte der mindestens zwei Messgrößen die innerhalb des Zeitfensters (t₁-t₂) gemessenen Messwerte der mindestens zwei Messgrößen ausgewertet werden.

12. Verfahren nach einem der vorhergehenden Ansprüche, **dadurch gekennzeichnet, dass** beim Verfahrensschritt (S3) Bestimmen des vorhandenen Lüftspiels anhand einer Näherungskurve (30) ausgehend von dem festgelegten Startpunkt (28) mittels des Ersatzmodells (12) ein Betätigungshub (s) auf einen Ansprechdruck (p_{AD}) zurückgerechnet wird, wobei der Wert des mathematischen Ersatzmodells (12) bei dem Ansprechdruck (p_{AD}) als Lüftspielwert (29) des vorhandenen Lüftspiels der Scheibenbremse (1) bestimmt wird.

13. Verfahren nach Anspruch 12, **dadurch gekennzeichnet dass** die Näherungskurve (30) durch das Ersatzmodell (12) bestimmt wird.

14. Verfahren nach Anspruch 12 oder 13, **dadurch gekennzeichnet, dass** für den Ansprechdruck (p_{AD}) vorher festlegbare Einzelwerte oder/und Kennfelder verwendet werden.

15. Verfahren nach Anspruch 14, **dadurch gekennzeichnet, dass** die für den Ansprechdruck (p_{AD}) verwendeten vorher festlegbaren Einzelwerte oder/und Kennfelder mithilfe von Messwerten aktualisiert und angepasst werden.

16. Verfahren nach Anspruch 15, **dadurch gekennzeichnet dass** die Messwerte zum Aktualisieren und Anpassen Messwerte der erfassten Messwerte der mindestens zwei Messgrößen sind.

17. Verfahren nach einem der vorhergehenden Ansprüche, **dadurch gekennzeichnet, dass** beim Verfahrensschritt (S3) Bestimmen des vorhandenen Lüftspiels das mathematische Ersatzmodell (12) als eine lineare Steifigkeit der Scheibenbremse (1) ist.

18. Verfahren nach einem der vorhergehenden Ansprüche, **dadurch gekennzeichnet, dass** für das mathematische Ersatzmodell (12) vorher festlegbare Einzelwerte oder/und Kennfelder verwendet werden.

19. Verfahren nach Anspruch 18, **dadurch gekennzeichnet, dass** die für das mathematische Ersatzmodell (12) verwendeten vorher festlegbaren Einzelwerte oder/und Kennfelder mithilfe von Messwerten aktualisiert und angepasst werden.

20. Verfahren nach Anspruch 19, **dadurch gekennzeichnet dass** die Messwerte zum Aktualisieren und Anpassen Messwerte der erfassten Messwerte der mindestens zwei Messgrößen sind.

21. Scheibenbremse (1), insbesondere für ein Kraftfahrzeug, mit einer Zuspannvorrichtung (2), vorzugsweise mit einem Bremsdrehhebel, einer Belagverschleißnachstellvorrichtung (6), die vorzugsweise in eine Spindeleinheit (3, 3') der Scheibenbremse (1) einsetzbar und mit der Zuspannvorrichtung (2), vorzugsweise mit dem Bremsdrehhebel, gekoppelt ist, einem Sensor (15) zur Erfassung eines Betätigungshubs (s), einem Sensor (16) zur Erfassung einer Betätigungskraft oder eines Betätigungsdrucks (p), und einem Bremssteuergerät (7),
**dadurch gekennzeichnet,**
**dass** die Scheibenbremse (1) eine Messvorrichtung (10) mit einer Auswerteeinrichtung (11) und mindestens eine Speichereinrichtung (14) zur Bestimmung eines vorhandenen Lüftspiels der Scheibenbremse (1)gemäß einem Verfahren nach einem der vorhergehenden Ansprüche aufweist.

22. Scheibenbremse (1) nach Anspruch 21, **dadurch gekennzeichnet, dass** die Auswerteeinrichtung (11) zur Auswertung der Messwerte der Sensoren (15, 16) und zur Auswahl einer oder mehrerer charakteristische Kraft- oder/und Druckwerte (26) und einer oder mehrere charakteristische Hubwerte (27) davon ausgebildet ist.

23. Scheibenbremse (1) nach Anspruch 22, **dadurch gekennzeichnet, dass** die Auswerteeinrichtung (11) zur Bestimmung des vorhandenen Lüftspiels der Scheibenbremse (1) unter Anwendung eines mathematischen Ersatzmodells (12) der Scheibenbremse (1) ausgebildet ist.

24. Scheibenbremse (1) nach einem der Ansprüche 21 bis 23, **dadurch gekennzeichnet, dass** die Auswerteeinrichtung (11) mit einem Bremspedal (9) oder/und einem Bremssteuergerät (7) der Scheibenbremse (1) gekoppelt ist.

## Claims

1. Method for determining the clearance present in a disc brake (1), in particular for a motor vehicle, having the following method steps:
(S1) measuring at least two measurement variables of the disc brake (1) during a braking process, wherein one measurement variable of the at least two measurement variables is an activation force and / or an activation pressure (p) of the disc brake (1), and another measurement variable of the at least two measurement variables is an activation stroke (s) of the disc brake (1);
(S2) evaluating the detected measured values of the at least two measurement variables by selecting specific values (26, 27) and defining a starting point (28) on the basis of the selected values (26, 27);
**characterised by** the following method step:
(S3) determining the clearance present in the disc brake (1) by means of a mathematical equivalent model (12) of the disc brake (1) based on the defined starting point (28).

2. Method according to claim 1, **characterised in that** in the method step (S1), the measurement of the at least two measurement variables of the disc brake (1), the measurement of the activation force and / or of the activation pressure (p) of the disc brake (1) and the measurement of the activation stroke (s) of the disc brake (1) occur simultaneously, and the measured values are stored.

3. Method according to claim 1 or 2, **characterised in that** in the method step (S1) of measuring at least two measurement variables of the disc brake (1) measured values of the measured measurement variables are filtered.

4. Method according to one of the preceding claims, **characterised in that** in the method step (S2) of evaluating the acquired measured values of the at least two measurement variables one or more characteristic force values and / or pressure values (26) and one or more characteristic stroke values (27) are selected.

5. Method according to claim 4, **characterised in that** the one or more characteristic force values and / or pressure values (26) and stroke values (27) are each maximum values.

6. Method according to one of the preceding claims, **characterised in that** in the method step (S1) of measuring at least two measurement variables of the disc brake (1) a first point in time (t1) is defined as a start of the braking process and a second point in time (t2) as an end of the braking process.

7. Method according to claim 6, **characterised in that** the first point in time (t1) and the second point in time (t2) are defined by a signal of a brake control unit (7) of the disc brake (1) and / or an activation of a brake pedal (9) of a motor vehicle, to which the disc brake (1) is assigned.

8. Method according to claim 6, **characterised in that** the first point in time (t1) and the second point in time (t2) are defined by an algorithm.

9. Method according to claim 8, **characterised in that** the algorithm processes measured values of at least one of the at least two measurement variables.

10. Method according to one of claims 6 to 9, **characterised in that** the first point in time (t1) and the second point in time (t2) form a time window (t1 - t2).

11. Method according to claim 10, **characterised in that** in the method step of evaluating the measured values of the at least two measurement variables the measured values, of the at least two measurement variables, measured within the time window (t1 - t2) are evaluated.

12. Method according to one of the preceding claims, **characterised in that** in the method step (S3) of determining the clearance present by means of a proximity curve (30) on the basis of the defined starting point (28) by means of the equivalent model (12) an activation stroke (s) is calculated back to a response pressure (pAD), wherein the value of the mathematical equivalent model (12) in the case of the response pressure (PAD) is determined as a clearance value (29) of the clearance present at the disc brake (1).

13. Method according to claim 12, **characterised in that** the proximity curve (30) is determined by means of the equivalent model (12).

14. Method according to claim 12 or 13, **characterised in that** individual values and / or characteristic diagrams which can be predefined in advance are used for the response pressure (pAD).

15. Method according to claim 14, **characterised in that** the individual values and / or characteristic diagrams which can be predefined in advance and which are used for the response pressure (pAD) are updated and adapted using measured values.

16. Method according to claim 15, **characterised in that** the measured values for updating and adapting are measured values of the acquired measured values of the at least two measurement variables.

17. Method according to one of the preceding claims, **characterised in that** in the method step (S3) of determining the clearance present the mathematical equivalent model (12) is as a linear rigidity of the disc brake (1).

18. Method according to one of the preceding claims, **characterised in that** individual values and / or characteristic diagrams which can be predefined in advance are used for the mathematical equivalent model (12).

19. Method according to claim 18, **characterised in that** the individual values and / or characteristic diagrams which can be predefined in advance and which are used for the mathematical equivalent model (12) are updated and adapted using measured values.

20. Method according to claim 19, **characterised in that** the measured values for updating and adapting are measured values of the acquired measured values of the at least two measurement variables.

21. Disc brake (1), in particular for a motor vehicle, having a brake application device (2), preferably having a brake rotary lever, a lining wear-adjustment device (6), which can preferably be inserted into a spindle unit (3, 3') of the disc brake (1) and is coupled to the brake application device (2), preferably to the brake rotary lever, a sensor (15) for detecting an activation stroke (s), a sensor (16) for detecting an activation force or an activation pressure (p), and a brake control unit (7),
**characterised in that**
the disc brake (1) has a measuring device (10) with an evaluation means (11) and at least one storage device (14) for determining the clearance present at the disc brake (1) according to a method according to one of the preceding claims.

22. Disc brake (1) according to claim 21, **characterised in that** the evaluation means (11) is designed to evaluate the measured values of the sensors (15, 16) and to select one or more characteristic force and / or pressure values (26) and one or more characteristic stroke values (27) thereof.

23. Disc brake (1) according to claim 22, **characterised in that** the evaluation means (11) is designed to determine the clearance present at the disc brake (1) by applying a mathematical equivalent model (12) of the disc brake (1).

24. Disc brake (1) according to one of claims 21 to 23, **characterised in that** the evaluation means (11) is coupled to a brake pedal (9) and / or to a brake control unit (7) of the disc brake (1).

## Revendications

1. Procédé de détermination d'un jeu existant des garnitures d'un frein (1) à disque, notamment pour un véhicule automobile, ayant les stades de procédé suivants :
(S1) mesure d'au moins deux grandeurs de mesure du frein (1) à disque pendant une opération de freinage, une grandeur de mesure parmi les au moins deux grandeurs de mesure étant une force d'actionnement ou/et une pression (p) d'actionnement du frein (1) à disque et une autre grandeur de mesure parmi les au moins deux grandeurs de mesure étant une course (s) d'actionnement du frein (1) à disque ;
(S2) exploitation des valeurs de mesure relevées des au moins deux grandeurs de mesure en choisissant des valeurs (26, 27) déterminées et fixation d'un point (28) de début à l'aide des valeurs (26, 27) choisies ;
**caractérisé par** le stade de procédé suivant :
(S3) détermination du jeu existant des garnitures du frein( 1) à disque au moyen d'un modèle (12) mathématique de substitution du frein (1) à disque en partant du point (28) de début fixé.

2. Procédé suivant la revendication 1, **caractérisé en ce que**, dans le stade S1 du procédé mesure des au moins deux grandeurs de mesure du frein (1) à disque, la mesure de la force d'actionnement ou/et de la pression (p) d'actionnement du frein (1) à disque et la mesure de la course (S) d'actionnement du frein à disque s'effectuent simultanément et on mémorise les valeurs de mesure.

3. Procédé suivant la revendication 1 ou 2, **caractérisé en ce que**, dans le stade (S1) du procédé mesure d'au moins deux grandeurs de mesure du frein (1) à disque, on filtre des valeurs de mesure des grandeurs de mesure mesurées.

4. Procédé suivant l'une des revendications précédentes, **caractérisé en ce que**, dans le stade (S2) de procédé exploitation des valeurs de mesure relevées des au moins deux grandeurs de mesure, on choisit une ou plusieurs valeurs (26) de force ou/et de pression caractéristiques et une ou plusieurs valeurs (27) de course caractéristiques.

5. Procédé suivant la revendication 4, **caractérisé en ce que** la/les plusieurs valeurs (26) de force ou/et de pression et valeurs (27) de course caractéristiques sont des valeurs maximum.

6. Procédé suivant l'une des revendications précédentes, **caractérisé en ce que**, dans le stade (S1) du procédé mesure d'au moins deux grandeurs de mesure du frein (1) à disque, on effectue une fixation d'un premier instant (t₁) comme début de l'opération de freinage et d'un deuxième instant (t₂) comme fin de l'opération de freinage.

7. Procédé suivant la revendication 6, **caractérisé en ce qu'**on effectue une fixation du premier instant (t₁) et du deuxième instant (t₂) par le signal d'un appareil (7) de commande du frein (1) à disque ou/et par un actionnement d'une pédale (9) de frein d'un véhicule automobile, qui est associée au frein (1) à disque.

8. Procédé suivant la revendication 6, **caractérisé en ce qu'**une fixation du premier instant (t₁) et du deuxième instant (t₂) s'effectue par un algorithme.

9. Procédé suivant la revendication 8, **caractérisé en ce que** l'algorithme traite des valeurs de mesure d'au moins l'une des au moins deux grandeurs de mesure.

10. Procédé suivant l'une des revendications 6 à 9, **caractérisé en ce que** le premier instant (t₁) et le deuxième instant (t₂) forment un créneau (t₁-t₂) de temps.

11. Procédé suivant la revendication 10, **caractérisé en ce que**, dans le stade du procédé exploitation des valeurs de mesure mesurées des au moins deux grandeurs de mesure, on exploite les valeurs de mesure des au moins deux grandeurs de mesure mesurées dans le créneau (t₁-t₂) de temps.

12. Procédé suivant l'une des revendications précédentes, **caractérisé en ce que**, dans le stade (S3) du procédé détermination du jeu présent des garnitures, on calcule en retour, à l'aide d'une courbe (30) d'approximation du point (28) de début fixé au moyen du modèle (12) de substitution, une course (S) d'actionnement à une pression (p_{AD}) de réponse, la valeur du modèle (12) mathématique de substitution à la pression (p_{AD}) de réponse étant définie comme valeur (29) du jeu présent des garnitures du frein (1) à disque.

13. Procédé suivant la revendication 12, **caractérisé en ce qu'**on définit la courbe (30) d'approximation par le modèle (12) de substitution.

14. Procédé suivant la revendication 12 ou 13, **caractérisé en ce qu'**on utilise, pour la pression (p_{AD}) de réponse, des valeurs individuelles pouvant être fixées auparavant ou/et des courbes caractéristiques.

15. Procédé suivant la revendication 14, **caractérisé en ce qu'**on met à jour et adapte, à l'aide de valeurs de mesure, des valeurs individuelles ou/et des courbes caractéristiques pouvant être fixées auparavant et utilisées pour la pression (p_{AD}) de réponse.

16. Procédé suivant la revendication 15, **caractérisé en ce que** les valeurs de mesure pour la mise à jour et l'adaptation sont des valeurs, de mesure parmi les valeurs de mesure relevées des au moins deux grandeurs de mesure.

17. Procédé suivant l'une des revendications précédentes, **caractérisé en ce que**, dans le stade (S3) du procédé détermination du jeu présent des garnitures, le modèle (12) mathématique de substitution est sous la forme d'une rigidité linéaire du frein (1) à disque.

18. Procédé suivant l'une des revendications précédentes, **caractérisé en ce qu'**on utilise, pour le modèle (12) mathématique de substitution, des valeurs individuelles ou/et des courbes caractéristiques pouvant être fixées auparavant.

19. Procédé suivant la revendication 18, **caractérisé en ce qu'**on met à jour et adapte, au moyen de valeurs de mesure, les valeurs individuelles ou/et les courbes caractéristiques pouvant être fixées auparavant et utilisées pour le modèle (12) mathématique de substitution.

20. Procédé suivant la revendication 19, **caractérisé en ce que** les valeurs de mesure pour la mise à jour et l'adaptation sont des valeurs de mesure parmi les valeurs de mesure relevées des au moins deux grandeurs de mesure.

21. Frein (1) à disque, notamment pour un véhicule automobile, ayant un dispositif (2) de serrage, de préférence ayant un levier tournant de frein, un dispositif (6) de rattrapage de l'usure des garnitures, qui peut être utilisé, de préférence, dans une unité (3, 3') de broche du frein (1) à disque et qui est couplé au dispositif (2) de serrage, de préférence par le levier tournant de frein, une sonde (15) de détection d'une course (s) d'actionnement, une sonde (16) de détection d'une force d'actionnement ou d'une pression (p) d'actionnement et un appareil de commande de frein,
**caractérisé**
**en ce que** le frein (1) à disque a un dispositif de mesure ayant un dispositif (11) d'exploitation et au moins un dispositif (14) de mémorisation pour déterminer un jeu présent des garnitures du frein (1) à disque selon un procédé suivant l'une des revendications précédentes.

22. Frein (1) à disque suivant la revendication 21, **caractérisé en ce que** le dispositif (11) d'exploitation est constitué pour l'exploitation des valeurs de mesure des sondes (15, 16) et pour le choix d'une ou de plusieurs valeurs (26) de force ou/et de pression caractéristiques et d'une ou de plusieurs valeurs (27) de course caractéristiques parmi celles-ci.

23. Frein (1) à disque suivant la revendication 22, **caractérisé en ce que** le dispositif (11) d'exploitation est constitué pour la détermination du jeu présent des garnitures du frein (1) à disque, en utilisant un modèle (12) mathématique de substitution du frein (1) à disque.

24. Frein (1) à disque suivant l'une des revendications 21 à 23, **caractérisé en ce que** le dispositif (11) d'exploitation est couplé à une pédale (9) de frein ou/et à un appareil (7) de commande du frein (1) à disque.
